# EUROPÄISCHE PATENTSCHRIFT

(11) **EP 1 636 069 B1**
(45) Veröffentlichungstag und Bekanntmachung des Hinweises auf die Patenterteilung: **05.09.2007**
(21) Anmeldenummer: 03767432.2
(22) Anmeldetag: 18.11.2003
(51) Int. Cl.: B60R 21/01

(54) **VORRICHTUNG ZUR ANSTEUERUNG VON R CKHALTEMITTELN**
DEVICE FOR TRIGGERING RESTRAINT MEANS
DISPOSITIF DE COMMANDE DE MOYENS DE RETENUE

(30) Priorität: 12.06.2003 DE 10326563
(43) Veröffentlichungstag der Anmeldung: 22.03.2006
(73) Patentinhaber: ROBERT BOSCH GMBH, 70442 Stuttgart (DE)
(72) Erfinder: KUTTENBERGER, Alfred, 71696 Moeglingen (DE); THEISEN, Marc, 74354 Besigheim (DE); BUNSE, Michael, 76530 Baden-Baden (DE)
(86) Internationale Anmeldenummer: PCT/DE2003/003819
(87) Internationale Veröffentlichungsnummer: WO 2004/110821

(56) Entgegenhaltungen:
- DE-A- 10 141 886
- US-A- 6 087 928
- US-A1- 2002 112 911
- US-A1- 2003 051 530

## Beschreibung

### Stand der Technik

Die Erfindung geht aus von einer Vorrichtung zur Ansteuerung von Rückhaltemitteln nach der Gattung des unabhängigen Patentanspruchs.

Aus DE 198 15 002 A1 ist es bekannt, dass Rückhaltemittel in Abhängigkeit von einem Signal von einer Precrashsensorik angesteuert werden.

Aus US 6,087,928 A ist es bekannt, mittels einer Radarsensorik eine Trajektorie eines Hindernisses zu überwachen. Mittels einer Ultraschallsensorik ist es möglich, das Objekt dahingehend zu klassifizieren, ob es ein Lebewesen oder eine Sache ist.

### Vorteile der Erfindung

Die erfindungsgemäße Vorrichtung zur Ansteuerung von Rückhaltemitteln mit den Merkmalen des unabhängigen Patentanspruchs hat demgegenüber den Vorteil, dass nunmehr als die Precrashsensorik eine Kombination aus einer Ultraschallsensorik und einer Mikrowellensensorik verwendet wird. Dies ermöglicht, dass die Ultraschallsensorik mit einem großen Öffnungswinkel für niedrige Relativgeschwindigkeiten zwischen einem Objekt und dem Fahrzeug verwendet wird, während die Mikrowellensensorik zur Erfassung des Objekts mit einer hohen Relativgeschwindigkeit zwischen dem Objekt und dem Fahrzeug eingesetzt wird. Dabei wird sich die Erkenntnis zunutze gemacht, dass bei Unfällen mit hoher Relativgeschwindigkeit meist mit einem Frontalaufprall zu rechnen ist, und dass hier die Mikrowellensensorik mit einem kleinen Öffnungswinkel, aber dafür für große Geschwindigkeiten verwendet wird. Die Ultraschallsensorik ist auf Grund der stärkeren Dämpfung und der Ausbreitungsgeschwindigkeit in Luft nur für niedrige Geschwindigkeiten bis ca. 40 km/h bezüglich der Relativgeschwindigkeit einsetzbar. Bis zu dieser Geschwindigkeit ereignen sich jedoch 80% aller Unfälle. Mit einer Mikrowellensensorik, die als Radar ausgebildet ist, insbesondere bei 77 GHz, kann dagegen eine relativ große Reichweite erfasst werden und damit auch Objekte mit einer erheblich höheren Relativgeschwindigkeit zum Fahrzeug, bis beispielsweise 200 km/h. Mit dieser geschwindigkeitsangepassten Objekterfassung durch verschiedene Sensoriken ist es dann möglich, Rückhaltemittel sowohl irreversible, wie Airbag oder Gurtstraffer, als auch reversible, wie Gurtstraffer, zeit- und situationsgenau anzusteuern. Damit ist insbesondere die Möglichkeit gegeben, eine genaue Trennung zwischen Auslösung und Nichtauslösung der Rückhaltemittel zu erreichen. Neben den Precrashsensoren können auch Aufprallsensoren wie Beschleunigungssensoren Signale erzeugen, die die Ansteuerung der Rückhaltemittel beeinflussen. Die Ultraschallsensorik hat insbesondere den Vorteil, dass sie in dem niedrigen Geschwindigkeitsbereich über die gesamte Fahrzeugbreite Objekte erfassen kann.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von Rückhaltemitteln möglich.

Besonders vorteilhaft ist, dass die Ultraschallsensorik bis zu einer Relativgeschwindigkeit von 40 km/h eingesetzt wird und darüber die Mikrowellensensorik. Diese kann bis zu einer Geschwindigkeit von 200 km/h eingesetzt werden. Die Mikrowellensensorik wird als Radar bei 77 GHz eingesetzt. Neben dem Pulsechoverfahren sind auch andere Modualtionsverfahren, wie ein dauerstrich-frequenzmoduliertes Verfahren oder ein gepulstes frequenzmoduliertes Verfahren möglich.

Vorteilhafterweise wird die Geschwindigkeitsbestimmung in Abhängigkeit derer die Vorrichtung die Ultraschallsensorik oder die Mikrowellensensorik zur Objekterfassung auswählt, durch die Mikrowellensensorik bestimmt, da diese in einem größeren Bereich für die Relativgeschwindigkeit diese Relativgeschwindigkeit bestimmen kann.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Vorrichtung und
- Figur 2: ein Flussdiagramm.

### Beschreibung

Erfindungsgemäß wird vorgeschlagen, mit Hilfe einer Kombination von einer Ultraschallsensorik und einer Mikrowellensensorik, die als Radar bei 77 GHz ausgebildet ist, Informationen wie die Relativgeschwindigkeit zwischen dem Fahrzeug und dem Objekt, der Time-To-Inpact (TTI), also der Zeit, bis es zum Aufprall kommt, dem Offset, der Überlappung und der Objektklasse zu sensieren und dem Steuergerät für die Rückhaltemittel die Informationen zur Verfügung zu stellen, wodurch die Rückhaltemittel dann angesteuert werden.

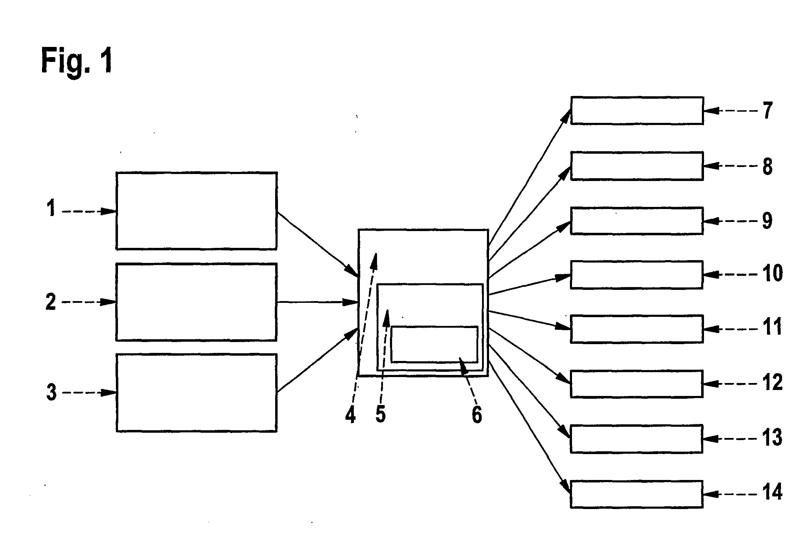

Figur 1 verdeutlicht in einem Blockschaltbild die erfindungsgemäße Vorrichtung. Eine Crashsensorik 1 ist an einen ersten Dateneingang eines Steuergeräts 4 für Rückhaltemittel angeschlossen. An einen zweiten Dateneingang ist eine Ultraschallsensorik 2 angeschlossen, während an einen dritten Dateneingang eine Mikrowellensensorik 3 angeschlossen ist. Das Steuergerät 4 weist zur Verarbeitung der Sensorsignale der Sensoriken 1 bis 3 einen Prozessor 5 auf, auf dem ein Algorithmus 6 zur Ansteuerung der Rückhaltemittel gerechnet wird. Die Signale der Precrashsensorik, also der Ultraschallsensorik 2 und der Mikrowellensensorik 3, dienen zur Bestimmung der Relativgeschwindigkeit und des Aufprallzeitpunkts. In Abhängigkeit von diesen Parametern können reversible Rückhaltemittel wie ein Gurtstraffer angesteuert werden und auch irreversible Rückhaltemittel parametriert werden, um auf die Unfallschwere und den Unfallzeitpunkt optimal eingestellt zu werden. Erkennt die Crashsensorik 1, dass der Aufprall vorliegt, dann erfolgt die Ansteuerung der Rückhaltemittel durch den Prozessor 4. Dazu gehören dann auch die irreversiblen Rückhaltemittel, wie die Airbags und pyrotechnischen Gurtstraffer sowie Überrollbügel. Sitzaktuatoren können auch schon in der Phase angesteuert werden, in der die reversiblen Rückhaltemittel angesteuert werden. Zur Ansteuerung der Rückhaltemittel ist das Steuergerät 4 mit einem Fahrerairbag 7, mit einem Beifahrerairbag 8, mit Knieairbags 9, mit einem Windowairbag 10, mit einem pyrotechnischen Gurtstraffer 11, mit Sitzaktuatoren 12, mit einem Überrollbügel 13 sowie reversiblen Gurtstraffern 14 verbunden. Es ist möglich, dass einige dieser Rückhaltemittel in einem jeweiligen Fahrzeug nicht zur Verfügung stehen und dass die Rückhaltemittel in ihrer Zahl variieren. D.h. es können beispielsweise 4, 8 oder 16 Airbags in einem Fahrzeug eingebaut sein.

Die Ultraschallsensorik 2 hat zur Zeit eine Detektionsreichweite von 3 Metern. Sie besitzt jedoch einen großen Öffnungswinkel, so dass sich der Bereich vor dem Fahrzeug lückenlos überwachen lässt. Auf Grund der eingeschränkten Reichweite und anderer Randbedingungen ist zur Zeit eine Geschwindigkeitsmessung von bis zu ca. 40 km/h möglich. Bis zu dieser Geschwindigkeit ereignen sich jedoch ca. 80% aller Unfälle. Daher sind Signale von der Ultraschallsensorik als eine Precrashsensorik von großem Nutzen für die Ansteuerung der Rückhaltemittel. Der entscheidende Parameter ist dabei die Relativgeschwindigkeit zwischen dem Fahrzeug und dem Objekt. Mit dieser Information der Precrashsensorik ist es möglich, eine genaue Trennung zwischen Auslösung und Nichtauslösung zu erreichen. Für den Fall, dass irreversible Rückhaltemittel aktiviert werden, kann aus den zusätzlich gewonnenen Daten die Auslösung gegenüber einem rein beschleunigungsbasierten Algorithmus weiter verbessert werden. Ferner kann auch im unteren Geschwindigkeitsbereich eine Aktivierung reversibler Rückhaltemittel mit der Ultraschallsensorik 2 dargestellt werden.

Im Gegensatz dazu ist mit der Mikrowellensensorik 3 wegen des kleinen Öffnungswinkels nur ein schmaler Bereich vor dem Fahrzeug erfassbar. Jedoch können mit der Mikrowellensensorik 3 auch Geschwindigkeiten bis zu 200 km/h detektiert werden. Somit kann diese Information im Airbagsteuergerät 4 genutzt werden, um die Rückhaltemittel 7 bis 14 optimal zu aktivieren. Zu diesen Rückhaltemittel gehören dann reversible und irreversible Rückhaltemittel.

Betrachtet man nun beide Sensoren, also die Ultraschallsensorik 2 und die Mikrowellensensorik 3 zusammen, dann kann der Bereich der Unfälle noch erweitert werden. So können mit der Ultraschallsensorik 2 die Unfälle im niedrigen Geschwindigkeitsbereich über die gesamte Fahrzeugbreite erfasst werden, während mit der Mikrowellensensorik 3 die Unfälle mit höheren Geschwindigkeiten, die zum überwiegenden Teil frontaler Art sind, erfasst werden.

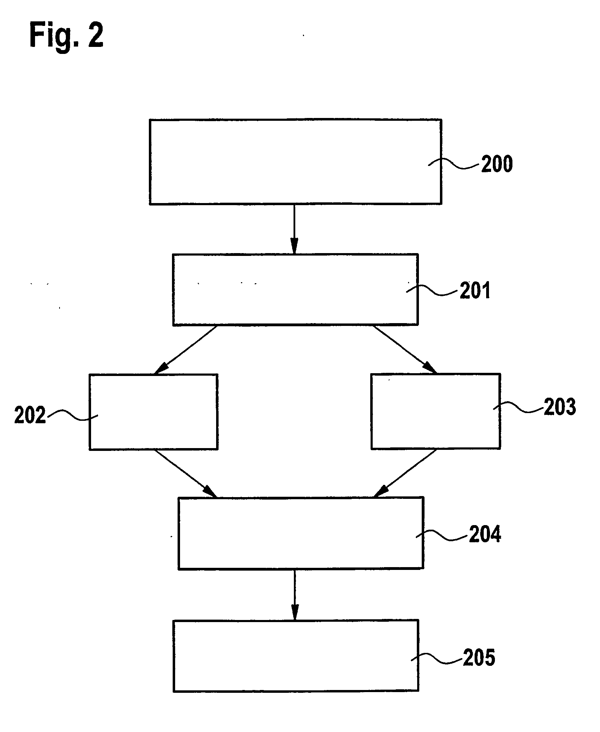

In Figur 2 ist ein Flussdiagramm dargelegt, das die Funktionsweise der erfindungsgemäßen Vorrichtung erläutert. In Verfahrensschritt 200 wird eine Relativgeschwindigkeit zu einem Objekt bestimmt. Dazu wird die Mikrowellensensorik 3 verwendet. Anhand dieser Relativgeschwindigkeit wird dann entschieden, welche der Sensoriken, als die Ultraschallsensorik 2 oder die Mikrowellensensorik 3, zur Objekterfassung verwendet werden soll. Dies geschieht in Verfahrensschritt 201. Ist die Geschwindigkeit beispielsweise unter 40 km/h, dann wird in Verfahrensschritt 202 die Ultraschallsensorik 2 gewählt. Ist die Geschwindigkeit jedoch über 40 km/h, dann wird die Mikrowellensensorik 203 verwendet. Die jeweils ausgewählte Sensorik übermittelt dann ein Mess-Signal an das Steuergerät 4. Dies wird in Verfahrensschritt 204 durchgeführt. In Abhängigkeit von diesem Signal steuert dann der Prozessor 5 mit seinem Algorithmus 6 die entsprechenden Rückhaltemittel 7 bis 14 an.

Sowohl die Ultraschallsensorik 2, als auch die Radarsensorik 3 weisen ein Sendemodul zum Versenden eines Testsignals aus und ein Empfangsmodul zum Empfang des reflektierten Signals. Anhand der Laufzeit und der Geschwindigkeit des ausgesendeten Testsignals lässt sich die Entfernung berechnen. Durch die Verwendung mehrerer solcher Sende-Empfangsmodule ist es möglich, auch die Richtung zu bestimmen. Auch die Amplitude des empfangenen Signals lässt einen Rückschluss auf die Laufzeit über die Dämpfung zu.

Die Mikrowellensensorik 3, die bei 77 GHz betrieben wird, zeigt einen Oszillatormischer und eine Sendevorrichtung zum Emittieren des Radarsignals. Es ist auch ein Empfangsstrang vorgesehen, der beispielsweise an die gleiche Antenne angeschlossen wird, um diese als Sende-Empfangsantenne zu betreiben. Auch der Empfangsstrang weist Mischer zum Heruntermischen des empfangenen Signals auf, um dann in Abhängigkeit von der gewählten Modulationsart eine Empfangsschaltung vorzusehen. Die Ultraschallsensorik 2 weist Ultraschallsensorwandler auf, die Ultraschallwellen emittieren und auch wieder empfangen, um sie in elektrische Signale umwandeln zu können. Bei der Ultraschallsensorik 2 wird üblicherweise ein Puls-Echo-Verfahren verwendet.

## Patentansprüche

1. Vorrichtung zur Ansteuerung von Rückhaltemitteln (7 bis 14), wobei die Vorrichtung eine Precrashsensorik (2, 3) aufweist und in Abhängigkeit von wenigstens einem Signal der Precrashsensorik (2, 3) die Rückhaltemittel (7 bis 14) ansteuert, wobei die Precrahsensorik (2, 3) eine Ultraschallsensorik (2) zur Erfassung von wenigstens einem ersten Objekt mit einer niedrigen Relativgeschwindigkeit und einer Mikrowellensensorik (3) zur Erfassung von einem zweiten Objekt mit einer hohen Relativgeschwindigkeit aufweist, wobei die Ultraschallsensorik (2) und die Mikrowellensensorik (3) das wenigstens eine Signal erzeugen, **dadurch gekennzeichnet, dass** die Vorrichtung in Abhängigkeit von einer Geschwindigkeitsbestimmung auswählt, ob die Vorrichtung die Ultraschallsensorik (2) oder die Mikrowellensensorik (3) zur Objekterfassung auswählt.

2. Vorrichtung nach Anspruch 1, **dadurch gekennzeichnet, dass** die Ultraschallsensorik (2) das erste Objekt mit einer Relativgeschwindigkeit von bis zu 40 km/h erfasst und die Mikrowellensensorik (3) das zweite Objekt mit einer Relativgeschwindigkeit von bis zu 200 km/h erfasst.

3. Vorrichtung nach Anspruch 1 oder 2, **dadurch gekennzeichnet, dass** die Mikrowellensensorik (3) Mikrowellen bei 77 GHz emittiert.

4. Vorrichtung nach Anspruch 1, **dadurch gekennzeichnet, dass** die Mikrowellensensorik (3) die Geschwindigkeitsbestimmung durchführt.

5. Vorrichtung nach Anspruch 1, **dadurch gekennzeichnet, dass** die Ultraschallsensorik (2) die Geschwindigkeitsbestimmung durchführt.

## Claims

1. Device for triggering restraint means (7 to 14), the device having a precrash sensor system (2, 3) and triggering the restraint means (7 to 14) on the basis of at least one signal from the precrash sensor system (2, 3), the precrash sensor system (2, 3) having an ultrasonic sensor system (2) for detecting at least one first object with a low relative speed and a microwave sensor system (3) for detecting a second object with a high relative speed, the ultrasonic sensor system (2) and the microwave sensor system (3) generating the at least one signal, **characterized in that** the device selects, on the basis of a speed determination, whether the device selects the ultrasonic sensor system (2) or the microwave sensor system (3) for detecting the object.

2. Device according to Claim 1, **characterized in that** the ultrasonic sensor system (2) detects the first object with a relative speed of up to 40 km/h and the microwave sensor system (3) detects the second object with a relative speed of up to 200 km/h.

3. Device according to Claim 1 or 2, **characterized in that** the microwave sensor system (3) emits microwaves at 77 GHz.

4. Device according to Claim 1, **characterized in that** the microwave sensor system (3) determines the speed.

5. Device according to Claim 1, **characterized in that** the ultrasonic sensor system (2) determines the speed.

## Revendications

1. Dispositif de commande de moyens de retenue (7-14), comportant des capteurs de pré-collision (2, 3) et commandant les moyens de retenue (7-14),en fonction d'au moins un signal des capteurs de pré-collision (2, 3)
les capteurs de pré-collision (2, 3) comportant des capteurs à ultrason (2) pour saisir au moins un premier objet à vitesse relative faible et un capteur à hyperfréquences (3) pour saisir un second objet à vitesse relative élevée,
les capteurs à ultrasons (2) et les capteurs à hyperfréquences (3) générant au moins un signal,
**caractérisé en ce qu'**
en fonction d'une détermination de vitesse le dispositif choisit s'il sélectionne les capteurs à ultrasons (2) ou les capteurs à hyperfréquences (3) pour détecter l'objet.

2. Dispositif selon la revendication 1,
**caractérisé en ce que**
les capteurs à ultrasons (2) détectent le premier objet à une vitesse relative allant jusqu'à 40 km/h et les capteurs à hyperfréquences (3) détectent le second objet avec une vitesse relative allant jusqu'à 200 km/h.

3. Dispositif selon la revendication 1 ou 2,
**caractérisé en ce que**
les capteurs à hyperfréquences (3) émettent des hyperfréquences jusqu'à une fréquence de 77 GHz.

4. Dispositif selon la revendication 1,
**caractérisé en ce que**
les capteurs à hyperfréquences (3) déterminent la vitesse.

5. Dispositif selon la revendication 1,
**caractérisé en ce que**
les capteurs à ultrasons (2) déterminent la vitesse.
